# EUROPEAN PATENT APPLICATION

(11) **EP 1 038 482 A1**
(43) Date of publication of application: **27.09.2000**
(21) Application number: 99302355.5
(22) Date of filing: 26.03.1999
(51) Int. Cl.: A47J 27/21

(54) **Filter Kettle**

(71) Applicant: Windmill Plastics Limited, Sunbury-on-Thames, Middlesex TW16 7DT (GB)
(72) Inventor: Robinson, Thomas, Danbury, Oxfordshire OX15 6EU (GB)
(74) Representative: BROOKES & MARTIN

(57) **Abstract**

A kettle or kettle/base unit which includes a water container and a heater to heat the water, a pump means and filter means being provided such that the pump passes water from the water container through the filter and back into the water container.

## Description

The present invention relates to a filter kettle for boiling filtered water for domestic consumption.

A filter kettle is disclosed in UK-A-2294631 and containers with water filters are also generally known in which water is filtered before use. In UK 2294631 there is disclosed a kettle which effectively includes two water containers, one into which the water is initially poured, a pump and a filter for transferring water from the first container to a second container thereby filtering the water before it passes into the second container and a heating element being provided in the second container to heat the water.

Whilst such an arrangement is useful, there are a number of disadvantages. A particular problem is that there is a requirement for two containers which increases the size, weight and cost of the kettle.

Modern electric kettles are of two types. There is the normal kettle in which the element is provided in the base of the kettle, and the power supply is passed direct to the kettle, or there is the type in which the kettle sits on a separate base unit, the separate base unit providing an electrical connection through to the element in the kettle itself, and the base unit being connected to the power line.

The present invention relates to a kettle or kettle/base unit comprising a water container, means whereby water may be poured from, for example, a domestic tap into the water container, means for pouring water out of the water container after it has been heated, pump means, and filter means, the arrangement being such that the pump passes water from said water container through said filter, and back into said water container.

It will be noted, that whereas in UK 2294631 all of the water passes through the filter in a single pass from the first container to the second container, in the present application, only a single water container is required, and all of the water will pass through the filter over the course of time. The pump can operate if necessary even whilst the water is heating in the kettle.

In the arrangement of a kettle and base, it is possible to provide the pump in the base unit but there are difficulties in providing suitable water connections. A more practical arrangement in such a combination is that the pump is provided in the kettle, the motor for driving the pump is provided in the base unit and there is provided a mechanical or magnetic connection between the motor in the base unit and the pump in the kettle to drive the pump. In the other arrangement of a kettle alone, then the pump and motor will be provided in the kettle itself.

The filter may be of a known type and may comprise an ion exchange resin and activated carbon which also removes nitrates and heavy metals from the water.

We shall describe two preferred arrangements of a kettle or kettle/base unit according to the invention.

In the first arrangement there is provided a kettle of an electric type, being connected by a flexible lead to a power socket. The kettle contains a single water container, which may be as is provided in a normal kettle. Thus there may be provided a spout through which water may be passed into the container and from which water may be poured from the container when heated. In the base of the container there may be provided an electric heating element, and at some point, preferably towards the base of the container, there is provided an outlet through which water may pass. The outlet may be connected by a separate tube or, alternatively, by a tube moulded into the material of the kettle, which tube connects with a pump. The pump may include an impeller arrangement of a particular design or type, which may be a centrifugal impeller or a positive displacement impeller. The outlet from the impeller of the pump then pumps water through a filter of activated charcoal and ion exchange resin and back into the container, preferably towards the top of the container.

The impeller may be driven by an electric motor powered with the kettle.

The pump impeller may suitably be provided in the base wall of the kettle.

The filter may be provided either in the base of the kettle along with the pump, or, may be provided in the form of a filter bag mounted in a tubular housing which extends up one side of the container whereby water pumped into the base of the filter bag passes out through the filter and back into the container.

In use of this arrangement, when it is desired to heat water, water is poured into the kettle typically through the spout, the kettle is connected to a power supply and the electric heating element begins to heat the water. At the same time the pump is set in motion and passed water through the tube, through the filter and back into the container. The pumping speed of the pump and size and operation of the filter may be arranged so that during the time that it takes to heat the water, a volume equal to more than the volume of the container may pass through the filter. If, for example, the volume of water passing through the filter during the course of the heating operation is two or three times the volume of the container, then it is likely that all of the water in the container will have passed through the filter at least once and will have spent the required contact time with the filter media.

Alternatively, there may be an arrangement where the pump can be operated separately so that the water can initially be filtered before it is heated.

In an alternative arrangement which comprises a kettle and base unit, the kettle is as described above except that it does not have a direct connection to power from the socket but is mounted on a base unit as is well known. The base unit is connected by a flexible lead to the electric socket. Furthermore, whilst the impeller is mounted as described above, the motor may be mounted in the base unit, and there is a connection provided between the motor in the base unit and the impeller. At its simplest, this connection is provided by a mechanical rotating connector, for example, the base unit having a rotating disk with an upper surface which mates with a downwardly projecting rotatable disk in the bottom of the kettle, or may be provided by means of a magnetic connection. In other respect the kettle/base unit operates like the kettle described above.

The invention is not restricted to the details of the foregoing example. The kettle is preferably moulded of plastics material, as are all parts of the apparatus except the motor and electrical connections. The general arrangement and outward appearance of the kettle and/or base unit may be substantially similar or identical to those of existing kettles. Thus the kettle may be in the form of a jug kettle having a handle on its rear end and being generally tall and upright or may be a standard kettle in which the handle extends over the top of the kettle.

Various arrangements of filter may be used; the filter may be a more or less solid type of filter perhaps mounted in the base of the kettle but such an arrangement requires a lot of mechanical power to force the water through it. Alternatively, the filter may comprise a generally tubular housing which may extend up one side of the kettle inside the container, there being provided an annular housing surrounding the tubular filter so that water may pass up through the middle of the filter, pass out through the filter material, and through holes in the housing. In such an arrangement the filter is readily removed from the kettle and may be replaced from time to time.

## Claims

1. A water heating means comprising;
a water container,
a heater means to heat water in the container,
pump means, and
filter means,
the arrangement being such that the pump passes water from said water container through said filter, and back into said water container,
*characterised in that:*
the water heating means comprises a kettle or kettle/base unit;
means provided whereby water may be poured into the water container, and for pouring water out of the water container after it has been heated, and
the pumping speed of the pump means and size and operation of the filter means are arranged so that during the time that it takes to heat the water to boiling point, a volume of water equal to or more than the volume of the container passes through the filter.

2. A kettle means as claimed in claim 1 wherein the pump means is adapted to operate at the same time as the heater means is heating the water.

3. A kettle means as claimed in claim 1 or 2 wherein the filter comprises an ion exchange resin and activated carbon to remove or reduce nitrates and heavy metals from the water.

4. A kettle means in the form of a kettle/base unit as claimed in any of claims 1 to 3 wherein the pump means is provided in the kettle, a motor for driving the pump is provided in the base unit and there is provided a mechanical or magnetic connection between the motor in the base unit and the pump means in the kettle to drive the pump.

5. A kettle means as claimed in any of claims 1 to 4 wherein there is provided a single water container, a spout providing both said means whereby water may be poured into the container and means for pouring water out of the container, an electric heating element being provided in the base of the container, and towards the base of the container, there is provided an outlet through which water may pass, the outlet being connected by a tube which tube connects with the pump means, the outlet from the pump means pumping, in use, water through a filter means and back into the container, towards the top of the container.

6. A kettle means as claimed in any of claims 1 to 5 wherein the pump means comprises an impeller provided in a base wall of the container.

7. A kettle means as claimed in any of claims 1 to 6 wherein the filter is provided in a base wall of the container with the pump means.

8. A kettle means as claimed in any of claims 1 to 6 wherein the filter is provided in the form of a filter bag mounted in a tubular housing which extends up one side of the container whereby water pumped into the base of the filter bag passes out through the filter and back into the container.
